# EUROPEAN PATENT SPECIFICATION

(11) **EP 0 314 791 B1**
(45) Date of publication and mention of the grant of the patent: **13.10.1993**
(21) Application number: 87905275.1
(22) Date of filing: 05.08.1987
(51) Int. Cl.: H05H 1/34, B23K 9/26

(54) **ELECTRODE STRUCTURE OF A NON-TRANSFER-TYPE PLASMA TORCH**
ELEKTRODENSTRUKTUR FÜR EINEN PLASMABRENNER VOM NON-TRANSFER-TYP
STRUCTURE D'ELECTRODE POUR UNE TORCHE A PLASMA DU TYPE A NON-TRANSFERT

(30) Priority: 05.08.1986 JP 182714/86
(43) Date of publication of application: 10.05.1989
(73) Proprietor: KABUSHIKI KAISHA KOMATSU SEISAKUSHO, Minato-ku Tokyo 107 (JP)
(72) Inventor: SAKURAGI, Shunichi, Hiratsuka-shi Kanagawa-ken 254 (JP); SINTANI, Toshiya, Kanagawa-ken 259-01 (JP); IWASAKI, Shigeki, Kanagawa-ken 259-01 (JP)
(74) Representative: Grünecker, Kinkeldey, Stockmair & Schwanhäusser Anwaltssozietät
(86) International application number: JP8700586
(87) International publication number: WO8801126

(56) References cited:
- DE-A- 2 033 072
- GB-A- 959 464
- JP-A- 4 879 593
- JP-A- 5 467 539
- JP-A- 5 533 791
- JP-A- 6 113 600

## Description

The present invention relates to an electrode structure of a non-transfer-type plasma torch employed in plasma cutting, plasma-jet welding, plasma heating and like treatments of material.

A plasma torch comprising similar features to the features claimed in the preamble of claim 1 is known from JP-A-48-79593.

One of conventional electrode structures of such non-transfer-type plasma torch is disclosed in JP-A-48-7867.

In this conventional electrode structure of the non-transfer-type plasma torch, a rod-shaped cathode made of tungsten and like metals is disposed in a position corresponding to a center line of a cathode holder. In front of the cathode holder, there is provided a relatively small clearance through which a nozzle constituting an anode is oppositely disposed from the rod-shaped cathode and is fixedly mounted in an anode holder. In operation, a pilot arc is first produced between the rod-shaped cathode and the nozzle constituting the anode, which pilot arc is followed by a main arc, so that it is not possible to make the clearance between the rod-shaped cathode and the nozzle too large. Namely, the clearance is limited to such an extent that a high-frequency electrical discharge is allowed through the clearance.

As described above, in the conventional type of the plasma torch, the clearance between the rod-shaped cathode and the nozzle constituting the anode is relatively small. Consequently, the voltage of the main arc discharge is also small and substantially within a range of from 20 to 40 V. However, in order to increase an output of a plasma jet issued from the nozzle, it is necessary to increase the current of the electrical discharge. As the current of the electrical discharge increases, an amount of the Joule heat produced in both of the rod-shaped cathode and the nozzle constituting the anode rapidly increases to considerably reduce their lives, particularly, the nozzle's life because discharged electrons hit the nozzle constituting the anode.

In addition, in the conventional plasma torch, since the amount of the Joule heat produced in both of the rod-shaped cathode and the nozzle constituting the anode is extremely large, a large amount of an input energy is removed by a cooling water and constitutes a considerable energy loss, so that the plasma jet produced in the conventional plasma torch is considerably poor in energy-saving efficiency.

Furthermore, in the conventional plasma torch, the arc produced on the nozzle constituting the anode travels irregularly on an inner wall surface of the nozzle to cause the output of the plasma jet to considerably vary, so as to make it impossible to stabilize the plasma jet.

The present invention has been made to resolve the above problems inherent in the conventional electrode structure of the non-transfer-type plasma torch, and has for its primary object to provide a novel electrode structure of the non-transfer-type plasma torch which exhibits small-current and high-tension operation characteristics and permits a longer electrical discharge distance.

It is another object of the present invention to provide the electrode structure of the non-transfer-type plasma torch which realizes a stable plasma arc by preventing the flow rate of a working gas passing through an electrical discharge space from being drastically reduced even when a nozzle opening of the nozzle is reduced.

It is still another object of the present invention to provide the electrode structure of the non-transfer-type plasma torch provided with electrodes consisting of a cathode and an anode each of which has a considerably long life.

The aforesaid objects are achieved by a non-transfer-type plasma torch comprising the features set out in claim 1.

Further, according to the present invention, there is provided an electrode structure of a non-transfer-type plasma torch, characterised in that the electrode structure described above further comprises an anode-control magnet for controlling said electric arc also produced on said anode, said anode-control magnet constructed of an electromagnetic coil or a permanent magnet and being coaxially mounted on an outer peripheral portion of said anode so as to be coaxially arranged with said anode, and in that the cathode-control magnet is also constructed of an electromagnetic coil or a permanent magnet.

In each of embodiments of the electrode structure of the non-transfer-type plasma torch of the present invention, an amount of the working gas being discharged from the plasma torch through the branched hole for the working gas thereof is increased even when the nozzle opening area of the plasma-jet nozzle is reduced for the purposes of individual applications, so as to make it possible to prevent the flow rate of the working gas passing through the electrical discharge space from being considerably reduced.

Other objects and advantages of the present invention will be apparent from the following description of the preferred embodiment of the present invention considered in connection with the accompanying drawings, submitted for purposes of illustration only and not intended to limit the scope of the present invention, reference being had for that purpose to the subjoined claims.
Fig. 1 is a longitudinal sectional view of an essential part of an embodiment of the electrode structure of the non-transfer-type plasma torch of the present invention;
Fig. 2 is a partially broken side view of the electrode structure of the plasma torch of the present invention for fine-cutting use; and
Fig. 3 is a partially broken side view of another embodiment of the cathode employed in the electrode structure of the plasma torch of the present invention.

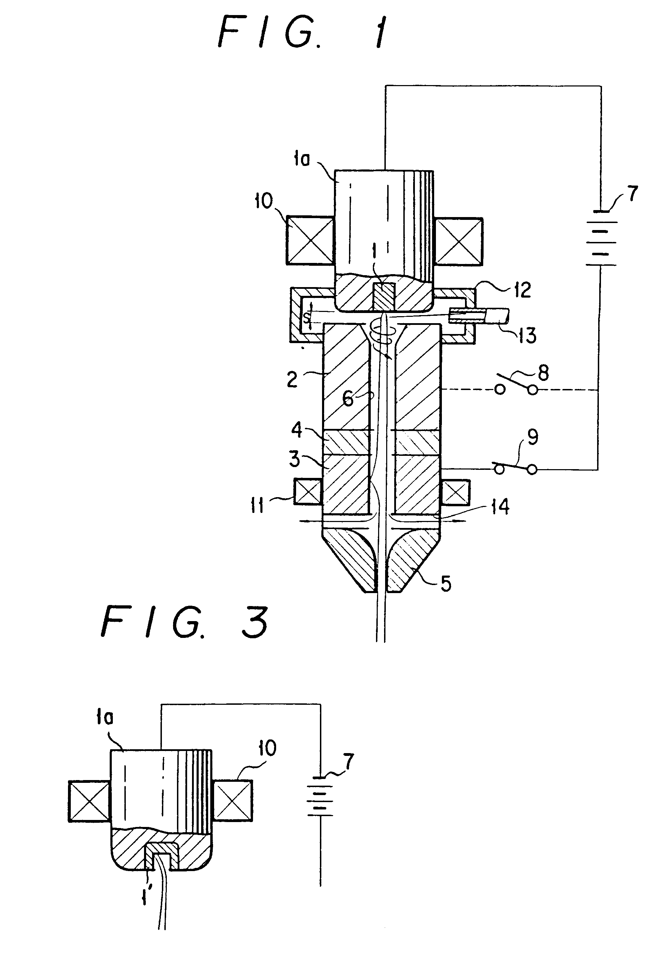

An embodiment of the present invention will be hereinbelow described in detail with reference to the drawings, particularly in Fig. 1 wherein: the reference numeral 1 denotes a small-diameter cylindrical cathode held in a holder 1a; 2 an intermediate electrode which is symmetrical with respect to its own longitudinal axis while axially oppositely disposed from the cathode 1 through a clearance "s"; 3 an anode which is symmetrical with respect to its own longitudinal axis while mounted on the intermediate electrode 2 through an electrical insulator 4 in a position oppositely disposed from the cathode 1; 5 a plasma-jet nozzle which is fixedly mounted on the holder 1a in a position in front of a front-end portion of the anode 3 while electrically insulated from the anode 3, through which nozzle 5 a center bore 6 axially extends to pass through both of the intermediate electrode 2 and the anode 3 and reach the cathode 1, the bore 6 constituting an electrical discharge space; 7 an electrical power source which is connected with the cathode 1 at one of its terminals while connected with both of the intermediate electrode 2 by means of a switch 8 and the anode 3 by means of another switch 9 connected to the switch 8 in parallel in an electrical circuit of the embodiment of the plasma torch of the present invention.

A cathode-control magnet 10 for controlling an electric arc produced on the cathode 1 is constructed of an electromagnetic coil or a permanent magnet coaxially mounted on an outer peripheral portion of the holder 1a holding the cathode 1. On the other hand, an anode-control magnet 11 is constructed of an electromagnetic coil or a permanent magnet coaxially mounted on an outer peripheral portion of the anode 3.

As shown in Fig. 1, the interior space of a cylindrical chamber 12 for receiving a working gas or plasma-forming gas is defined between a front-end portion of the cathode 1 encircled with its holder 1a and the intermediate electrode 2. The chamber 12 is provided with a plurality of working-gas inlet nozzles 13 in its peripheral portion, which nozzles 13 so open into the chamber 12 as to produce a swirl of the working gas in the chamber 12. A working-gas branched hole 14 is provided in the plasma torch at a position between the anode 3 and the plasma-jet nozzle 5 so as to open into an exterior space. Both of the plasma-jet nozzle 5 and the working-gas branched hole 14 can be varied in their opening area for accomplishing the purposes of individual applications.

In operation of the plasma torch of the present invention having the above construction, the switch 8 interposed between the intermediate electrode 2 and the electrical power source 7 is first turned on to produce a high-frequency electrical discharge constituting a pilot arc in a position between the cathode 1 and the intermediate electrode 2. The pilot arc produce a plasma which reaches the anode 3. After the plasma reaches the anode 3, the another switch 9, which is connected with the switch 8 in parallel while interposed between the electrical power source 7 and the anode 3, is turned on to produce a main arc between the cathode 1 and the anode 3, so that the plasma torch is now ready for regular operation. The pilot arc is eliminated immediately after formation of the main arc, by turning off the switch 8 interposed between the intermediate electrode 2 and the electrical power source 7. At this time, the working gas flows into the chamber 12 to produce a swirl thereof, and then passes through the center bore 6 of the plasma torch into the plasma-jet nozzle 5, so that the working gas is finally issued from the nozzle 5. Among various application fields of the plasma torch, for example, a fine-cutting application field thereof requires reduction of an opening area of the plasma-jet nozzle 5. Incidentally, in the conventional plasma torch, when the opening area of the plasma-jet nozzle (5) is reduced, the flow resistance of the thus reduced opening area of the nozzle (5) increases in proportion to a reduced amount of the opening area of the plasma-jet nozzle (5). In contrast with such conventional plasma torch, in the plasma torch 5 of the present invention, there is no fear that the flow rate of the working gas passing through the electrical discharge space in the anode 3 drastically decreases, because the working-gas branched hole 14 enables the flow rate of the working gas passing through the branched hole 14 to increase when the opening area of the plasma-jet nozzle 5 is reduced.

On the other hand, the electric arc or plasma produced on the cathode 1 of the plasma torch of the present invention is controlled by the cathode-control magnet 10 coaxially mounted on the outer peripheral portion of the cathode holder 1a so as to have a long life.

In addition, the anode-control magnet 11 coaxially mounted on the anode 11 causes the electric arc produced on the inner wall surface of the anode 3 to circumferentially rotate therealong, so that the anode 3 has a considerably long life and makes the output of the plasma torch of the present invention considerably stable.

In this connection, in the plasma torch of the present invention, since the anode 3 is electrically insulated from the plasma-jet nozzle 5, there is no fear that the nozzle 5 is rapidly eroded and deformed under the influence of the Joule heat, whereby it is possible to ensure formation of a long-life stable high-energy plasma jet.

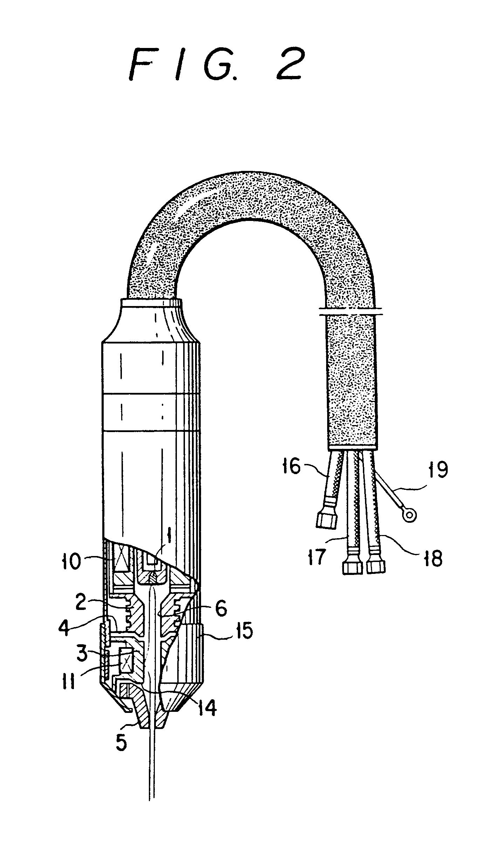

Fig. 2 shows an example of applications of the electrode structure of the plasma torch of the present invention for fine-cutting use, wherein: the reference numeral 15 denotes a sealed cup; 16 a working-gas pipe; 17 and 18 a cooling-water inlet and outlet pipes respectively; and 19 an electrical cable for the pilot arc. The other components of this example shown in Fig. 2 are the sames as those of the embodiment of the present invention shown in Fig. 1.

As shown in Fig. 3, in the electrode structure of the present invention, it is possible to replace the above-mentioned small-diameter cylindrical column element 1 with a concave column element 1' which is also ensure the same effects as those of the embodiment of the present invention shown in Fig. 1.

## Claims

1. An electrode structure of a non-transfer-type plasma torch including:
a holder (1a) for holding a cathode (1) of a small-diameter cylindrical shape at a centre of a front-end portion of said holder (1a) so as to be symmetrical with respect to a longitudinal axis of said holder (1a);
a plasma-jet nozzle (5) which is so fixedly mounted on said holder (1a) that said nozzle (5) holds an anode (3) being symmetrical with respect to its own longitudinal axis;
an intermediate electrode (2) which is symmetrical with respect to its own longitudinal axis and interposed between said cathode (1) and said anode (3) so that said intermediate electrode (2) is spaced apart from said cathode (1);
an electrical insulator (4) interposed between said intermediate electrode (2) and said anode (3) so as to insulate said intermediate electrode (2) from said anode (3);
a branched hole (14) for working gas, which hole (14) is defined between said anode (3) and said nozzle (5) to establish communication between an electrical-discharge space (6) and an exterior space and whereby said anode (3) is electrically insulated from said nozzle (5), said electrical-discharge space (6) being adjacent to a longitudinal axis of said plasma torch; and
an electrical circuit provided with switch means (8) interposed between said intermediate electrode (2) and an electrical power source (7)
**characterised in that**
both of said plasma-jet nozzle (5) and said branched hole (14) can be varied in their opening area for the purpose of individual applications; and
by further comprising a cathode-control magnet (10) for controlling an electric or plasma arc produced on said cathode (1) which is coaxially mounted on an outer peripheral portion of said holder (1a) holding said cathode (1).

2. An electrode structure of the non-transfer-type plasma torch as set forth in claim 1, wherein said electrode structure further comprises:
an anode-control magnet (11) which is constructed of an electromagnetic coil or a permanent magnet coaxially mounted on an outer peripheral portion of said anode (3); and
said cathode-control magnet being constructed of an electromagnetic coil, or a permanent magnet.

3. The electrode structure of the non-transfer-type plasma torch as set forth in claim 1 or 2, wherein said electrode structure further comprises:
a plurality of working-gas inlet nozzles (13) for supplying a working gas to said electrical-discharge space (6) to produce a swirl of said working gas in said electrical-discharge space.

## Patentansprüche

1. Eine Elektrodenanordnung für eine Plasmafackel vom Nichttransfertyp mit:
einem Halter (1a) zum Halten einer Kathode (1) von zylindrischer Form mit kleinem Durchmesser in einer Mitte eines Vorderendes des Halters (1a), wobei diese symmetrisch bezüglich zu einer Längsachse des Halters (1a) angeordnet ist;
einer Plasma-Jet-Düse (5), welche so auf dem Halter (1a) fixiert ist, daß die Düse (5) eine Anode (3) symmetrisch zu ihrer eigenen Längsachse hält;
einer Zwischenelektrode (2), die symmetrisch zu ihrer eigenen Längsachse ist und zwischen der Kathode (1) und der Anode(3) so angeordnet ist, daß die Zwischenelektrode (2) von der Kathode (1) beabstandet ist;
einem elektrischen Isolator (4), welcher zwischen der Zwischenelektrode (2) und der Anode (3) angeordnet ist, wodurch die Zwischenelektrode (2) von der Anode (3) isoliert ist;
einer verzweigten Öffnung (14) für ein Arbeitsgas, die (14) zwischen der Anode (3) und der Düse (5) gebildet ist, wodurch eine Verbindung zwischen einem elektrischen Entladungsraum (6) und einem Außenraum hergestellt ist und wodurch die Anode (3) elektrisch von der Düse (5) isoliert ist und der elektrische Entladungsraum (6) entlang einer Längsachse der Plasmafackel gebildet ist; und
einer elektrischen Schaltung mit einer Schalteinrichtung (8), der zwischen der Zwischenelektrode (2) und einer elektrischen Spannungsversorgung (7) angeordnet ist, **dadurch gekennzeichnet,** daß
sowohl die Plasma-Jet-Düse (5) und die verzweigte Öffnung (14) in ihrer Öffnungsfläche für individuelle Anwendungen variierbar sind; und
daß ein Kathodensteuermagnet (10) zur Steuerung eines an der Kathode (1) erzeugten elektrischen oder Plasmabogens vorgesehen ist, welcher koaxial auf einem äußeren Umfangsbereich des die Kathode (1) haltenden Halters (1a) angeordnet ist.

2. Eine Elektrodenanordnung für eine Plasmafackel vom Nichttransfertyp nach Anspruch 1, **dadurch gekennzeichnet,** daß ein Anodensteuermagnet (11), der aus einer elektromagnetischen Spule oder einem Permanentmagneten gebildet ist, koaxial auf einem äußeren Umfangsbereich der Anode (3) angeordnet ist; und
daß der Kathodensteuermagnet aus einer elektromagnetischen Spule oder einem Permanentmagneten gebildet ist.

3. Elektrodenanordnung einer Plasmafackel vom Nichttransfertyp nach Anspruch 1 oder 2, **dadurch gekennzeichnet**, daß eine Vielzahl von Arbeitsgas-Einlaßdüsen (13) zur Zufuhr eines Arbeitsgases zum elektrischen Entladungsraum (6) ausgebildet sind, welche einen Wirbel des Arbeitsgases im elektrischen Entladungsraum erzeugen.

## Revendications

1. Structure d'électrode pour chalumeau à plasma du type sans transfert, comprenant :
un support (1a) servant à porter une cathode (1) d'une forme cylindrique de petit diamètre au centre d'une partie avant extrême du support (1a) de façon que cette cathode soit symétrique par rapport à l'axe longitudinal de ce support (1a);
une buse à jet de plasma (5) qui est montée de manière fixe sur le support (1a) de façon à maintenir une anode (3) dans une position symétrique par rapport à son propre axe longitudinal ;
une électrode intermédiaire (2) qui est symétrique par rapport à son propre axe longitudinal et est interposée entre la cathode (1) et l'anode (3) de façon à être située à distance de la cathode (1) ;
un élément d'isolation électrique (4) interposé entre l'électrode intermédiaire (2) et l'anode (3) de façon à isoler l'électrode intermédiaire (2) de l'anode (3) ;
un passage (14), destiné au gaz actif, qui comporte plusieurs branches et qui est délimité entre l'anode (3) et la buse (5) de façon à établir une communication entre un espace de décharge électrique (6) et l'espace extérieur, de sorte que l'anode (3) est isolée électriquement de la buse (5), l'espace de décharge électrique (6) étant voisin de l'axe longitudinal du chalumeau à plasma, et
un circuit électrique comprenant des moyens de commutation (8) interposés entre l'électrode intermédiaire (2) et une source de courant électrique (7),
caractérisée en ce que
la section transversale de passage à la fois de la buse à jet de plasma (5) et du passage (14) à plusieurs branches peut être modifiée aux fins de différentes applications et
la structure d'électrode comprend en outre un aimant de commande de cathode (10) qui sert à commander un arc électrique ou arc de plasma produit sur la cathode (1) et qui est monté suivant le même axe sur une partie périphérique extérieure du support (1a) portant la cathode (1).

2. Structure d'électrode pour chalumeau à plasma du type sans transfert suivant la revendication 1, dans laquelle la structure d'électrode comprend en outre :
un aimant de commande d'anode (11) qui est constitué d'un enroulement électromagnétique ou d'un aimant permanent monté suivant le même axe sur une partie périphérique extérieure de l'anode (3),
l'aimant de commande de cathode étant constitué d'un enroulement électromagnétique ou d'un aimant permanent.

3. Structure d'électrode pour chalumeau à plasma du type sans transfert suivant la revendication 1 ou 2, dans laquelle la structure d'électrode comprend en outre :
plusieurs ajutages d'entrée de gaz actif (13) servant à introduire un gaz actif dans l'espace de décharge électrique (6) pour produire un tourbillon de gaz actif dans cet espace de décharge électrique.
